# EUROPEAN PATENT APPLICATION

(11) **EP 3 379 732 A1**
(43) Date of publication of application: **26.09.2018**
(21) Application number: 17305329.9
(22) Date of filing: 23.03.2017
(51) Int. Cl.: H04B 3/54

(54) **ELECTRICAL SYSTEM AND METHOD OF CONTROLLING AN ELECTRICAL SYSTEM**

(71) Applicant: SRETT (SAS), 92100 Boulogne Billancourt (FR)
(72) Inventor: LONGHIN, Mattia, 92100 BOULOGNE BILLANCOURT (FR); SALAMITOU, Philippe, 92100 BOULOGNE BILLANCOURT (FR)
(74) Representative: den Braber, Gérard Paul

(57) **Abstract**

In an electrical system, a plurality of electrical devices (107, 108, 109) can draw electrical power from a power supply circuit through a conductive path. At least one electrical device is adapted to operate in a noise-inducing mode, in which the electrical device is susceptible to induce noise in the conductive path. A controller imposes a communication time interval (406) and noise permissive time interval (402) in the electrical system. In the communication time interval (406), the electrical devices (107, 108, 109) are enabled to communicate through the conductive path, whereas the electrical devices are inhibited from operating in the noise-inducing mode. In the noise permissive time interval (402), the electrical devices (107, 108, 109) are enabled to operate in the noise-inducing mode, whereas the electrical devices are inhibited from communicating through the conductive path.

## Description

### FIELD OF THE INVENTION

An aspect of the invention relates to an electrical system in which a plurality of electrical devices can draw electrical power from a power supply circuit through a conductive path. The electrical system may be in the form of, for example, a telemetry system, in particular a telemetry system adapted to be applied in a well bore installation. In such a telemetry system, an electrical device may be in the form of, for example, a down hole tool. Other aspects of the invention relate to a method of controlling an electrical system, and a computer program.

### BACKGROUND OF THE INVENTION

An electrical system typically comprises a conductive path through which electrical devices can draw electrical power from a power supply circuit. The conductive path may also be used for communication in the electrical system. For example, data may be transmitted by modulating a power supply voltage that is present on the conductive path. Data may also be transmitted by modulating a power supply current that flows through the conductive path.

### SUMMARY OF THE INVENTION

There is a need for a solution that allows electrical devices to reliably communicate over a conductive path through which the electrical devices can draw electrical power from a power supply circuit.

In order to better address this need, the following points have been taken into consideration. In an electrical system, an electrical device may temporarily operate in a noise-inducing mode in which the electrical device is susceptible to induce noise in a conductive path through which the electrical device draws electrical power. The electrical device may operate in the noise-inducing mode when, for example, an actuator in the electrical device is activated or when a circuit changes from one operating state to another operating state.

Noise that is induced in the conductive path may prevent an electrical device from reliably communicating with another entity in the electrical system through the conductive path. A solution to that problem may consist in using appropriate filters that suppress the noise. However, such filters may be relatively complex, and therefore relatively costly, and may also be relatively bulky.

In accordance with an aspect of the invention as defined in claim 1, an electrical system comprises:
- a conductive path;
- a power supply circuit coupled to the conductive path;
- a plurality of electrical devices coupled to the conductive path so as to draw electrical power from the power supply circuit, at least one electrical device being adapted to operate in a noise-inducing mode in which the electrical device is susceptible to induce noise in the conductive path; and
- a controller adapted to impose a communication time interval and noise permissive time interval in the electrical system, the electrical devices being enabled to communicate through the conductive path in the communication time interval, whereas the electrical devices are inhibited from operating in the noise-inducing mode in the communication time interval, the electrical devices being enabled to operate in the noise-inducing mode in noise permissive time interval, whereas the electrical devices are inhibited from communicating through the conductive path noise permissive time interval.

In accordance with other aspects of the invention, a method of controlling an electrical system and a computer program product are provided as defined in claims 14 and 15, respectively.

In each of these aspects, a controller imposes a time division multiplex mode of operation on the electrical system. In this mode of operation, a time interval, referred to as communication time interval, is reserved for communications within the electrical system, whereby the electrical devices are prevented from inducing noise in the conductive path through which these communications may pass. Another time interval, referred to as noise-permissive time interval, is reserved for allowing the electrical devices to operate in a fashion that may induce noise in the conductive path, whereby the electrical devices are prevented from communicating through the conductive path. This time division multiplex mode of operation prevents that communications that pass through the conductive path are affected by noise that an electrical device may induce in the conductive path. Accordingly, electrical devices may reliably communicate over the conductive path.

For the purpose of illustration, some embodiments of the invention are described in detail with reference to accompanying drawings. An embodiment may comprise one or more additional features that are defined in the dependent claims, which are appended to the description. Such an additional feature may provide a further advantage as will be apparent from the detailed description that follows.

### BRIEF DESCRIPTION OF THE DRAWINGS

FIG. 1 is a block diagram of a well bore installation that comprises a telemetry system.
FIG. 2 is a block diagram of a controller of the telemetry system.
FIG. 3 is a block diagram of a down hole tool in the well bore installation.
FIG. 4 is a time diagram of an operating cycle in the telemetry system.
FIG. 5 is a flow chart diagram of a method of controlling the telemetry system.

### DESCRIPTION OF SOME EMBODIMENTS

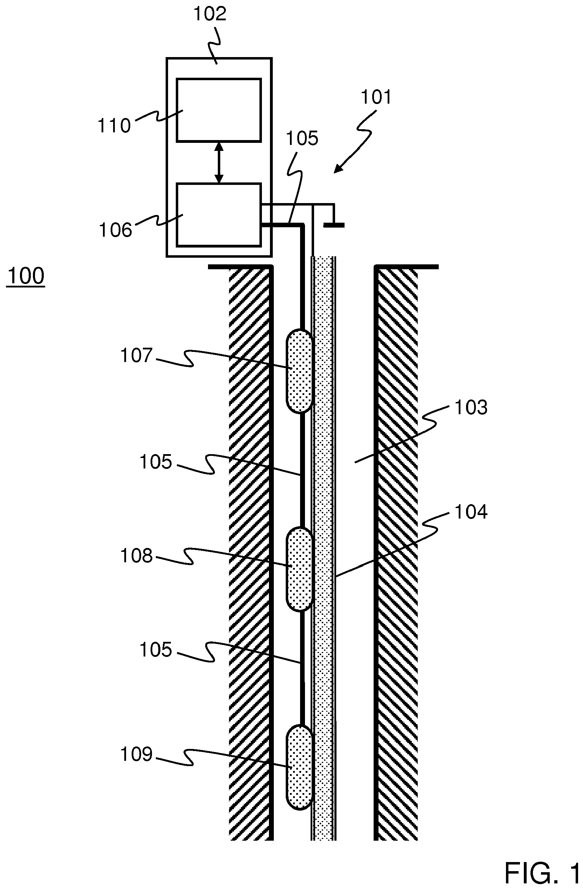

FIG. 1 schematically illustrates a well bore installation 100 that comprises an electrical system 101. The well bore installation 100 and the electrical system 101 comprised therein are represented in a block diagram. In this example, the electrical system 101 is a telemetry system that is applied in the well bore installation 100. The electrical system 101 will therefore be referred to hereinafter as telemetry system 101 hereinafter by way of illustration. The well bore installation 100 comprises a surface arrangement 102, a well bore 103, and a well completion arrangement 104 in the well bore 103. The well completion arrangement 104 is, at least partially, electrically conductive. As such, the well bore installation 100 may be similar to a well bore installation that is typically used in the oil and gas industry

The telemetry system 101 comprises a conductive path 105, a power supply circuit 106, several electrical devices 107, 108, 109, and a controller 110. The conductive path 105 is in the form of a mono-conductor cable. The conductive path 105 will therefore be referred to hereinafter as mono-conductor cable 105 hereinafter by way of illustration. The mono-conductor cable 105 is electrically coupled the power supply circuit 106 and the controller 110 and extends from the surface arrangement 102 into the well bore 103. The power supply circuit 106 and the controller 110 are comprised in the surface arrangement 102 of the well bore installation 100.

In this example, the electrical devices 107, 108, 109 are in the form of down hole tools that have been introduced into the well bore 103. An electrical device will therefore be referred to hereinafter as down hole tool by way of illustration. FIG. 1 illustrates three down hole tools 107, 108, 109 by way of illustration: a first down hole tool 107, a second down hole tool 108, and a third down hole tool 109 The telemetry system 101 may comprise more or less down hole tools, A down hole tool may be used, for example, in a water injection process that allows enhancing oil production of the well bore installation 100.

The down hole tools 107, 108, 109 are electrically coupled to the mono-conductor cable 105 and thus electrically coupled to the power supply circuit 106 and the controller 110 through the mono-conductor cable 105. The down hole tools 107, 108, 109 are also electrically coupled to the well completion arrangement 104. The well completion arrangement 104 may constitute signal ground for the telemetry system 101 and may thus constitute signal ground for the down hole tools 107, 108, 109.

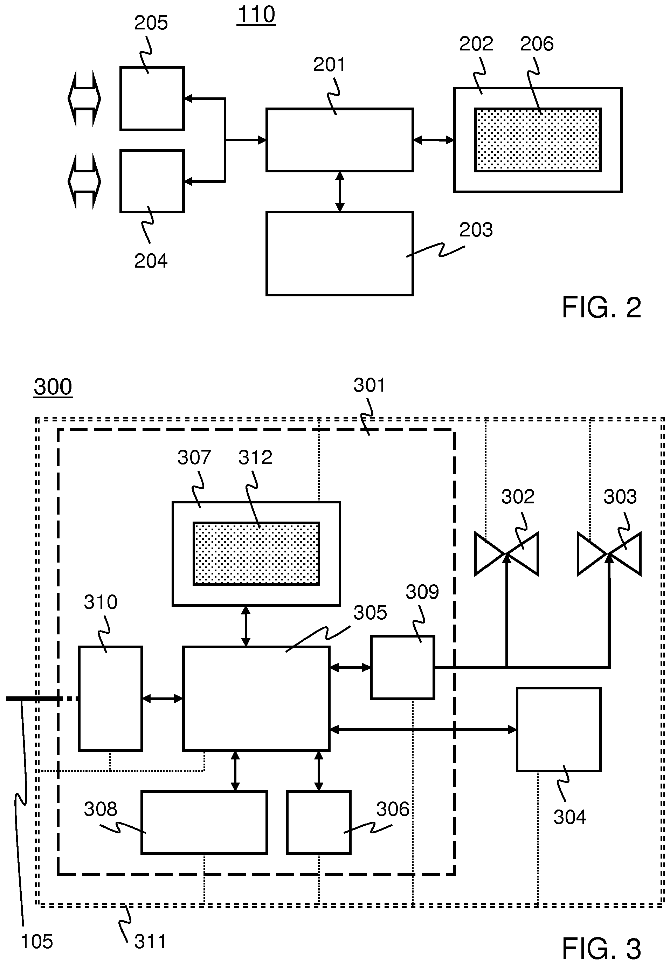

FIG. 2 schematically illustrates the controller 110 of the telemetry system 101. The controller 110 is represented in a block diagram. The controller 110 comprises a processor 201, a program memory 202, a data memory 203, a user interface 204, and a communication interface 205. The processor 201 may comprise, for example, an integrated circuit that incorporates an algorithmic logic unit, various registers, various cache memories, as well as other logic circuits. The program memory 202 comprises a controller software program 206. The program memory 202 may be composed of various data storage devices, such as, for example, one or more memory circuits, or one or more magnetic disks, or a combination of these. The same applies to the data memory 203. The user interface 204 may comprise, for example, a data entry device, which may be in the form of a keyboard, and a data display device. The communication interface 205 is coupled to the power supply circuit 106 of the telemetry system 101 illustrated in FIG. 1

FIG. 3 schematically illustrates a down hole tool 300 for a well bore installation. The down hole tool 300 is represented in a block diagram. The down hole tool 300 illustrated in FIG. 3 may be any of the three down hole tools 107, 108, 109 illustrated in FIG. 1 that form part of the telemetry system 101. The down hole tool 300 comprises an electronic assembly 301, two electro-valves 302, 303, and a flow rate sensor 304.

In more detail, the electronic assembly 301 comprises a processor 305, a time counter 306, a program memory 307, a data memory 308, a driver circuit 309, and a data modulation and demodulation circuit 310. The aforementioned electrical entities, which are comprised in the down hole tool 300, are electrically coupled to a chassis 311. The chassis 311 is electrically coupled to the well completion arrangement 104. The chassis 311 may thus constitute signal ground for the aforementioned entities. The remarks made hereinbefore with regard to the processor 201, the program memory 202, and the data memory 203 of the controller 110 illustrated in FIG. 2 equally apply to the processor 305, the program memory 307, and the data memory 308 of the down hole tool 300 illustrated in FIG. 3, The program memory 307 of the down hole tool 300 comprises a tool software program 312.

The telemetry system 101 of the well bore installation 100 illustrated in FIG. 1 basically operates as follows. The down hole tools 107, 108, 109 draw electrical power from the power supply circuit 106 in the surface arrangement 102 through the mono-conductor cable 105. The power supply circuit 106 applies a power supply voltage to the mono-conductor cable 105. An electrical power supply current flows from the power supply circuit 106 through the mono-conductor cable 105 to the down hole tools 107, 108, 109 and back from the down hole tools 107, 108, 109 to the power supply circuit 106 via the well bore 103 completion. The down hole tools 107, 108, 109 are electrically in parallel.

The controller 110 may communicate data to the down hole tools 107, 108, 109. For example, the controller 110 may transmit a command to a down hole tool whereby the down hole tool is instructed, for example, to actuate an electro-valve. Conversely, a down hole tool may communicate data to the controller 110. For example, referring to FIG. 3, the down hole tool may transmit a flow rate measurement from the flow rate sensor 304 to the controller 110. As another example, the down hole tool may transmit maintenance data to the controller 110. The controller 110 in the surface arrangement 102 may thus monitor and control the down hole tools 107, 108, 109 that are in the well bore 103.

In the telemetry system 101, data communication may pass through the mono-conductor cable 105, which is also used for conveying electrical energy as described hereinbefore. For example, the controller 110 may send data through the mono-conductor cable 105 by modulating the supply voltage that the power supply circuit 106 applies to the mono-conductor cable 105. An electrical device may send data through the mono-conductor cable 105, for example, by modulating a current drawn from the power supply circuit 106 through the mono-conductor cable 105.

The following issue may arise in sending data by modulating the power supply voltage. The mono-conductor cable 105 has an electrical resistance per unit of length. The power supply voltage that a down hole tool receives depends on the length of the mono-conductor cable 105 that extends from the power supply circuit 106 to the down hole tool. The same applies to a modulation of the power supply voltage in absolute value. This makes that data communication that relies on detecting the modulation in absolute value may be insufficiently reliable.

In order to resolve the aforementioned issue, the controller 110 may apply a Manchester coding to data to be send. The controller 110 applies Manchester coded data that has thus been obtained to modulate the power supply circuit 106. The power supply circuit 106 may modulate the power supply voltage with the Manchester coded data. A transition in the power supply voltage from a lower level to a higher level may represent a binary zero (0). Conversely, a transition from a higher level to a lower level may represent a binary one (1).

An issue similar to the one described hereinbefore may arise in sending data by modulating a current drawn from the power supply circuit 106. A down hole tool may be able to modulate the current it draws from the power supply circuit 106, but may not be able to modulate the current that other down hole tools draw from the power supply circuit 106. Moreover, the current that the down hole tool draws from the power supply circuit 106 may not be in fixed proportion with respect to the current that other down hole tools draw from the power supply. This makes that data communication that relies on detecting a degree of variation of the current that is drawn from the power supply circuit 106 may be insufficiently reliable. This issue too can be resolved by applying Manchester coding.

In the telemetry system 101 illustrated in FIG. 1, the power supply circuit 106 may provide the power supply voltage at two different levels, for example, at a level of 60 volt (V) and at a level of 70 volt. Transitions between these two levels may convey data by Manchester coding as described hereinbefore. The controller 110 illustrated in FIG. 2, may control the level of the power supply voltage through its communication interface 205, which is coupled to the power supply circuit 106. The controller 110 may thus transmit data by causing transitions between the two different levels of the power supply voltage. A down hole tool may detect these level transitions in the power supply voltage and extract the data that the controller 110 has conveyed. Referring to the down hole tool 300 illustrated in FIG. 3, the data modulation and demodulation circuit 310 may carry out this level detection and data extraction.

A down hole tool in the telemetry system 101 may induce level transitions in a current that the down hole tool draws from the power supply circuit 106. These current level transitions may convey data by Manchester coding as described hereinbefore. For example, a down hole tool may comprise a switchable resistance that is electrically coupled between the mono-conductor cable 105 and its chassis 311, which constitutes signal ground. Referring to the down hole tool 300 illustrated in FIG. 3, the switchable resistance may be comprised in the data modulation and demodulation circuit 310. If the switchable resistance is in a closed state, the down hole tool 300 will draw more current from the power supply circuit 106 than if the switchable resistance is in an open state. Thus a state change of the switchable resistance causes a level transition in current that is drawn from the power supply circuit 106.

The power supply circuit 106 may detect level transitions in the current that is drawn from the power supply circuit 106. The power supply circuit 106 may communicate data representative of these level transitions to the controller 110. The controller 110 may then extract from this data, the data that a down hole tool has conveyed.

Data communication through the mono-conductor cable 105 may be affected by noise. A down hole tool is susceptible of inducing noise in the mono-conductor cable 105. For example, referring to FIG. 3, the down hole tool 300 may induce noise when the driver circuit 309 actuates an electro-valve. This is because the down hole tool 300 needs to consume a relatively large amount of electrical power in order to actuate the electro-valve. The down hole tool 300 can thus be said to operate in a noise inducing mode when actuating an electro-valve.

In order to prevent noise from affecting data communication, the controller 110 imposes a communication time interval and a noise permissive time interval on the telemetry system 101 illustrated in FIG. 1. In the communication time interval, the down hole tools 107, 108, 109 are enabled to communicate through the mono-conductor cable 105. The down hole tools 107, 108, 109 are inhibited from operating in the noise-inducing mode in the communication time interval. Conversely, in the noise permissive time interval, the down hole tools 107, 108, 109 are enabled to operate in the noise-inducing mode. The down hole tools 107, 108, 109 are inhibited from communicating through the mono-conductor cable 105 in the noise permissive time interval.

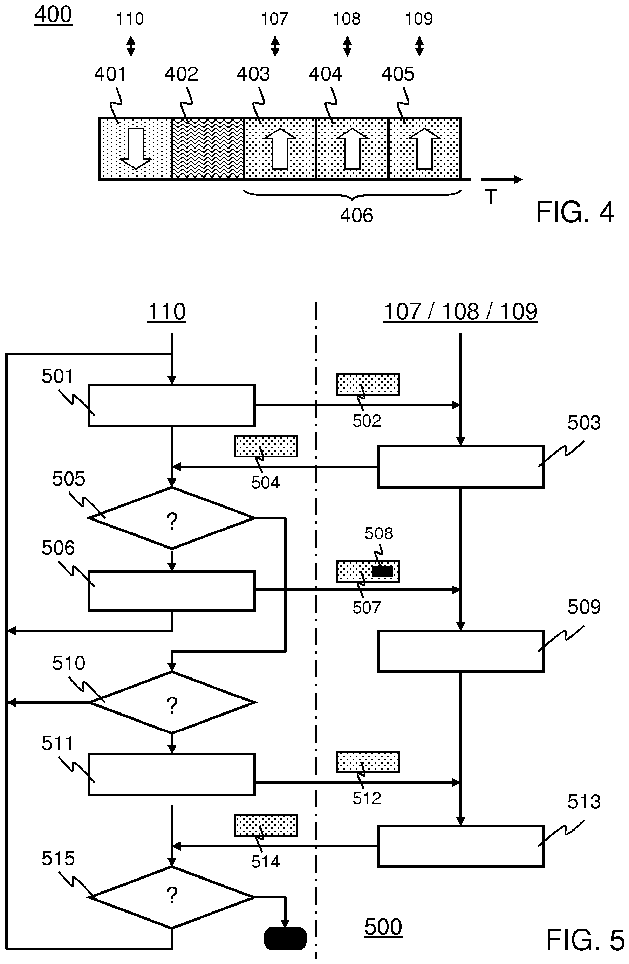

FIG. 4 schematically illustrates an operating cycle 400 in the telemetry system 101. The operating cycle 400 is represented in a time diagram comprising a horizontal axis that represents time (T). The controller 110 may define the operating cycle 400 in a configuration session, which is carried out when the telemetry system 101 is first used and when the telemetry system 101 has been reconfigured. The configuration session will be described in greater detail hereinafter.

The operating cycle 400 comprises a downlink time slot 401, an intermediate time slot 402 and a series of respective uplink time slots 403, 404, 405. In this example, the downlink time slot 401 constitutes the first time slot in the operating cycle 400. The intermediate time slot 402 is subsequent to the downlink time slot 401. The intermediate time slot 402 is followed by the respective uplink time slots 403, 404, 405.

The downlink time slot 401 is reserved for the controller 110 to communicate data to one or more of the down hole tools 107, 108, 109. The down hole tools 107, 108, 109 are inhibited from operating in the noise-inducing mode in the downlink time slot 401. The down hole tools 107, 108, 109 are also inhibited from communicating data in the downlink time slot 401.

The intermediate time slot 402, which the controller 110 has defined, constitutes the noise permissive time interval mentioned hereinbefore. That is, the down hole tools 107, 108, 109 are enabled to operate in the noise-inducing mode in the intermediate time slot 402. However, the down hole tools 107, 108, 109 are inhibited from communicating through the mono-conductor cable 105 in the intermediate time slot 402. The controller 110 may also refrain from communicating in the intermediate time slot 402.

In the downlink time slot 401, the controller 110 may send a command directed to a down hole tool. The down hole tool may comprise an actuator in the form of, for example, the two electro-valves 302, 303 as illustrated in FIG. 3. The down hole tool may then operate the actuator in accordance with the command in the intermediate time slot 402, which follows the downlink time slot 401 in which the command has been sent. In this fashion, the down hole tool may relatively quickly execute the command, allowing a fast response in the telemetry system 101.

The respective uplink time slots 403, 404, 405 have been assigned by the controller 110 to the respective down hole tools 107, 108, 109. A down hole tool is exclusively allowed to communicate in an uplink time slot that the controller 110 has assigned to the down hole tool. In this example, a first uplink time slot 403 is assigned to the first down hole tool 107, a second uplink time slot 404 is assigned to the second down hole tool 108, and a third uplink time slot 405 is assigned to the third down hole tool 109. The first down hole tool 107 is exclusively allowed to communicate in the first uplink time slot 403 that the controller 110 has assigned to this down hole tool. Similarly, the second and the third down hole tools 108, 109 are exclusively allowed to communicate in the second and the third uplink time slots 404, 405, respectively, which the controller 110 has assigned to these down hole tools 108, 109.

The respective uplink time slots 403, 404, 405 thus jointly constitute the communication time interval mentioned hereinbefore. In FIG. 4, reference 406 designates the communication time interval. In this time interval 406, the down hole tools 107, 108, 109 are enabled to communicate through the mono-conductor cable 105. On the other hand, the down hole tools 107, 108, 109 are inhibited from operating in the noise-inducing mode in this time interval 406 reserved for communication. It should be noted that the downlink time slot 401 may also be regarded as a communication time interval in the sense that the down hole tools 107, 108, 109 are inhibited from operating in the noise-inducing mode in this time slot 401 too.

A down hole tool may convey data to the controller 110 in the uplink time slot that has been assigned to the down hole tool. This data may represent a measurement that the down hole tool has carried out. For example, referring to the down hole tool 300 illustrated in FIG. 3, the data may represent a flow rate that the flow rate sensor 304 has measured. Data that a down hole tool communicates in an uplink time slot may also represent information concerning the down hole tool, such as, for example, maintenance that the down hole tool has undergone.

The down hole tool 300 illustrated in FIG. 3 may determine the occurrence of a particular time slot, such as the intermediate time slot 402 or any of the uplink time slots 403, 404, 405, by means of the time counter 306. The time counter 306 determines time elapsed since the downlink time slot 401. The time elapsed indicates the occurrence of a particular time slot in the operating cycle 400. The downlink time slot 401 may thus constitute a time reference for the down hole tools 107, 108, 109 in the telemetry system 101 illustrated in FIG. 1.

In more detail, the processor 305 of the down hole tool 300 illustrated in FIG. 3 may reset the time counter 306 upon receipt of downlink data, which occurs in the downlink time slot 401 only. The downlink data need not necessarily be directed to the down hole tool 300. The downlink data that resets the time counter 306 may be, for example, a synchronization word, which may systematically occur at the start of the downlink time slot 401. The processor 305 may recognize the synchronization word and, in response, reset the time counter 306. The time counter 306 then provides an indication of the time elapsed since the start of the downlink time slot 401

The down hole tool 300 may have a priori knowledge of the duration of the respective time slots 401-405 in the operating cycle 400. For example, this a priori knowledge may be stored in the data memory 308. The controller 110 may have specified the duration of the respective time slots 401-405 in the configuration session in which the operating cycle 400 has been defined. Alternatively, the duration of the respective time slots may be predetermined and fixed.

The operating cycle 400 illustrated in FIG. 4 described hereinbefore may be considered as a time division multiplexing technique, which allows coexistence of communication and actuation. Moreover, information can be transmitted in a pseudo real time fashion within the telemetry system 101, between the controller 110 in the surface arrangement 102 and the down hole tools 107, 108, 109 in the well bore 103. This information transmission may reliably pass through the mono-conductor cable 105, which is also used to provide the down hole tools 107, 108, 109 with electrical power.

FIG. 5 schematically illustrates a method 500 of controlling the telemetry system 101. The method 500 is illustrated in a flow chart diagram. The method 500 comprises a series of steps that involve the controller 110 and the three down hole tools 107, 108, 109 in the telemetry system 101 illustrated in FIG. 1. The method 500 comprises the configuration session mentioned hereinbefore, in which the controller 110 may define the operating cycle 400 illustrated in FIG. 4.

The flow chart diagram is vertically divided into two sections. A left-hand section illustrates various steps that the controller 110 carries out. Referring to FIG. 2, the controller 110 carries out these steps when the processor 201 executes the controller software program 206 in the program memory 202. The left-hand section of the flow chart diagram may thus be regarded as a representation of at least a part of the controller software program 206 in the program memory 202 of the controller 110.

A right-hand section illustrates various steps that a down hole tool carries out. Referring to FIG. 3, the down hole tool 300 carries out these steps when the processor 305 executes the tool software program 312 in the program memory 307. The right-hand section of the flow chart diagram may thus be regarded as a representation of at least a part of the tool software program 312 in the program memory 307 of the down hole tool 300. It is assumed that all three down hole tools 107, 108, 109 in the telemetry system 101 illustrated in FIG. 1 carry out the steps that are represented in the right-hand section of the flow chart diagram.

In an identification request step 501, the controller 110 sends an identification request 502 through the mono-conductor cable 105. The identification request 502 is not addressed to a particular down hole tool. In fact, it is assumed that the controller 110 has no a priori knowledge of the down hole tools 107, 108, 109 that are coupled to the mono-conductor cable 105 and that thus form part of the telemetry system 101. The controller 110 thus broadcasts the identification request 502 in the telemetry system 101 through the mono-conductor cable 105.

In an identification response step 503, a down hole tool that is in a reply enabled state sends identification data 504 through the mono-conductor cable 105 in reply to the identification request 502. The down hole tool may send the identification data 504 in reply to the identification request 502 with a delay that is randomly determined. This is done to avoid that the identification data 504 is sent simultaneously with identification data sent by another down hole tool. Such simultaneous sending would cause a collision. The one and the other identification data may interfere with each other such that neither of these data may correctly be received by the controller 110.

In a reply verification step 505, the controller 110 verifies whether any identification data has been received, or not, in reply to the most recent sent identification request 502. In case the controller 110 has received identification data from a down hole tool, the controller 110 carries out a receipt acknowledgment step 506. In case the controller 110 has not received any identification data, the controller 110 carries out a request count verification step 510.

In the receipt acknowledgment step 506, the controller 110 sends an acknowledgment of receipt 507 to the down hole tool from which the controller 110 has received the identification data 504. The acknowledgment of receipt 507 may thus specifically be directed to this down hole tool. The controller 110 may assign an uplink time slot to the down hole tool concerned before sending the acknowledgment of receipt 507. The controller 110 may then include in the acknowledgment of receipt 507 a specification 508 of the uplink time slot that is assigned to the down hole tool. Once the acknowledgment of receipt 507 has been sent, the controller 110 may carry out the identification request step 501 again.

In the request count verification step 510, the controller 110 verifies whether the reply verification step 505 has been carried out a predetermined number of times, or not, whereby it was found that no identification data was received. That is, the controller 110 checks whether a predetermined number of unsuccessful attempts to get identification data have been made. In case the predetermined number of unsuccessful attempts have not been made, the controller 110 carries out the identification request step 501 again. In case the predetermined number of unsuccessful attempts have been made, the controller 110 may carry out a verification process, which will be described hereinafter, before terminating the configuration session.

In a receipt acknowledgment processing step 509, the down hole tool to which the acknowledgment of receipt 507 is directed may set itself in a reply disabled state. Accordingly, the down hole tool will refrain from replying to any further identification request 502 that the controller 110 may send in the configuration session that is presently carried out. The down hole tool may further internally store the specification 508 of the uplink time slot that the controller 110 has assigned to the down hole tool. For example, assuming that the down hole tool is as illustrated in FIG. 3, the specification 508 of the uplink time slot may be stored in the data memory 308.

In what follows, it is assumed that the controller 110 has made the predetermined number of unsuccessful attempts to get identification data. The controller then carries out the verification process as mentioned hereinbefore. The verification process may comprise the following steps.

In a verification request step 511, the controller 110 sends a verification request 512 through the mono-conductor cable 105. The verification request 512 is not directed to a particular down hole tool. That is, the controller 110 broadcasts the verification request 512 in the telemetry system 101 through the mono-conductor cable 105.

In a verification reply step 513, a down hole tool sends a reply 514 to the verification request 512 in the time slot that has been assigned to the down hole tool. The down hole tool may further set itself back in the reply enabled state in response to receiving the verification request 512. This state change may precede sending the reply 514 to the verification request 512.

In a verification reply evaluation step 515, the controller 110 verifies whether the respective down hole tools 107, 108, 109 have replied in the respective time slots 403, 404, 405 that have been assigned to the respective down hole tools 107, 108, 109, or not. In case this verification is positive, the controller 110 may terminate the configuration session and signal this to the down hole tools 107, 108, 109. In case this verification is negative, the configuration session as described hereinbefore may be carried out again.

The configuration session as described hereinbefore with reference to FIG. 5, makes that a down hole tool need not have any a priori knowledge of the telemetry system 101 of which the down hole tool forms part. In principle, the telemetry system 101 may have any configuration. The telemetry system 101 may comprise any number down hole tools and other electrical devices functionally equivalent to the down hole tools. Moreover, a down hole tool need not be synchronized with respect to other entities in the telemetry system 101, prior to including the down hole tool in the telemetry system 101.

### NOTES

The embodiments described hereinbefore with reference to the drawings are presented by way of illustration. The invention may be implemented in numerous different ways. In order to illustrate this, some alternatives are briefly indicated.

The invention may be applied in numerous types of products or methods that involve communication between devices within an electrical system. The invention may be applied in any type of electrical system in which a plurality of electrical devices can draw electrical power from a power supply circuit through a conductive path. In the presented embodiments, the electrical system is a telemetry system applied in a well bore installation. In other embodiments, the electrical system may be applied in, for example, an industrial environment, wherein the electrical devices are in the form of industrial devices, or in a domestic environment, wherein the electrical devices may be in the form of domestic devices. The electrical system may also be comprised, for example, on a printed circuit board or in an integrated circuit. In such an embodiment, the conductive path may be in the form of, for example, a conductive track.

There are numerous different ways of configuring a communication time interval and a noise permissive time interval. In the presented embodiments, a communication time interval comprises a concatenation of respective uplink time slots assigned to respective electrical devices. In other embodiments, two respective uplink time slots may be separated by another type of time slot, such as, for example, a noise permissive time slot, or a downlink time slot. In such an embodiment, an operating cycle may comprise several communication time intervals. The operating cycle may also comprise several noise permissive time intervals. In yet other embodiments, an electrical device may request and obtain permission to communicate in a communication time interval, or in a dynamically assigned portion of the communication time interval. In such an embodiment, respective time slots need not be statically assigned to respective electrical devices.

There are numerous different ways of imposing a communication time interval and a noise permissive time interval on an electrical system. In the presented embodiments, a configuration session described with reference to FIG. 5 is carried out, so that a controller need not have a priori knowledge of an electrical system of which the controller forms part. In other embodiments, a controller may have a priori knowledge and use this to more directly define the aforementioned time intervals.

The term "controller" should be understood in a broad sense. The term may embrace any functional entity, in the form of hardware or software or a combination of these, that is capable of controlling at least one other functional entity, which may be in a similar form or in a different form.

In general, there are numerous different ways of implementing the invention, whereby different implementations may have different topologies. In any given topology, a single entity may carry out several functions, or several entities may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows an electrical system to operate in accordance with the invention. For example, software may be stored in a suitable device readable medium, such as, for example, a memory circuit, a magnetic disk, or an optical disk. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. An electrical system (101) comprising:
- a conductive path (105);
- a power supply circuit (106) coupled to the conductive path;
- a plurality of electrical devices (107, 108, 109) coupled to the conductive path so as to draw electrical power from the power supply circuit, at least one electrical device being adapted to operate in a noise-inducing mode in which the electrical device is susceptible to induce noise in the conductive path; and
- a controller (110) adapted to impose a communication time interval (406) and noise permissive time interval (402) on the electrical system, the electrical devices being enabled to communicate through the conductive path in the communication time interval, whereas the electrical devices are inhibited from operating in the noise-inducing mode in the communication time interval, the electrical devices being enabled to operate in the noise-inducing mode in the noise permissive time interval, whereas the electrical devices are inhibited from communicating through the conductive path in the noise permissive time interval.

2. An electrical system according to claim 1, wherein the controller (110) is adapted to assign respective uplink time slots (403, 404, 405) to respective electrical devices (107, 108, 109), the respective uplink time slots being comprised in the communication time interval (406), an electrical device being exclusively allowed to communicate in an uplink time slot that the controller has assigned to the electrical device.

3. An electrical system according to claim 2, wherein the controller (110) is adapted to reserve a downlink time slot (401) for the controller to communicate data to an electrical device, the electrical devices (107, 108, 109) being inhibited from operating in the noise-inducing mode in the downlink time slot.

4. An electrical system according to claim 3, wherein the controller (110) is adapted to position the noise permissive time interval (402) subsequent to the downlink time slot (401).

5. An electrical system according to any of claims 3 and 4, wherein the controller (110) is adapted to send a command in the downlink time slot (401), the command being directed to an electrical device comprising an actuator, the electrical device being adapted to operate the actuator in accordance with the command in the noise permissive time interval (402).

6. An electrical system according to any one of claims 3 to 5, wherein an electrical device (300) comprises a time counter (306) adapted to determine time elapsed since the downlink time slot (401), the time elapsed indicating an occurrence of the uplink time slot that has been assigned to the electrical device on the basis of the time elapsed.

7. An electrical system according to any of claims 1 to 6, wherein the controller (110) is adapted to send identification requests (502) through the conductive path (105), an electrical device being adapted to send identification data (504) through the conductive path in reply to an identification request.

8. An electrical system according claim 7, wherein an electrical device is adapted to send identification data (504) in reply to an identification request (502) with a delay that is randomly determined, the controller (110) being adapted to send an acknowledgement of receipt (507) to the electrical device, the electrical device being adapted to temporarily refrain from replying to any further identification request upon receipt of the acknowledgement of receipt.

9. An electrical system according to claim 8, wherein the controller (110) is adapted to include in the acknowledgment of receipt (507) a specification (508) of an uplink time slot that the controller has assigned to the electrical device.

10. An electrical system according to claim 9, wherein the controller (110) is adapted to send a verification request (512) through the conductive path (105), an electrical device being adapted to send a reply (514) to the verification request in the uplink time slot that the controller has assigned to the electrical device.

11. An electrical system according to any of the claims 1 to 10, wherein the controller (110) is adapted to send data through the conductive path (110) by modulating a supply voltage that the power supply circuit (106) applies to the conductive path.

12. An electrical system according to claim 11, wherein the controller (110) is adapted to apply a Manchester coding to data to be send, so as to obtain Manchester coded data, and to modulate the supply voltage with the Manchester coded data.

13. An electrical system according to any of the claims 1 to 12, wherein an electrical device is adapted to send data through the conductive path (105) by modulating a current drawn from the power supply circuit (106) through the conductive path.

14. A method of controlling an electrical system (110) that comprises:
- a conductive path (105);
- a power supply circuit (106) coupled to the conductive path; and
- a plurality of electrical devices (107, 107, 109) coupled to the conductive path so as to draw electrical power from the power supply circuit, at least one electrical device being adapted to operate in a noise-inducing mode in which the electrical device is susceptible to induce noise in the conductive path,
the method comprising:
- a configuration session (500) in which a communication time interval (406) and noise permissive time interval (402) are imposed on the electrical system, the electrical devices being enabled to communicate through the conductive path in the communication time interval, whereas the electrical devices are inhibited from operating in the noise-inducing mode in the communication time interval, the electrical devices being enabled to operate in the noise-inducing mode in the noise permissive time interval, whereas the electrical devices are inhibited from communicating through the conductive path in the noise permissive time interval.

15. A computer program (206) comprising a set of instructions that enables a processor (201), which is capable of executing the set of instructions within an electrical system (110) as defined in claim 1, to carry out the method according to claim 14.
